# EUROPEAN PATENT SPECIFICATION

(11) **EP 2 776 195 B1**
(45) Date of publication and mention of the grant of the patent: **23.08.2017**
(21) Application number: 12759870.4
(22) Date of filing: 04.09.2012
(51) Int. Cl.: B23D 47/12, B27B 9/00, B27B 9/02

(54) **BRUSHLESS DC MOTOR-DRIVEN CIRCULAR SAW**
MIT BÜRSTENLOSEM GLEICHSTROMMOTOR ANGETRIEBENE KREISSÄGE
SCIE CIRCULAIRE ENTRAINÉE PAR MOTOR A COURANT CONTINU SANS BALAIS (BLDC)

(30) Priority: 01.09.2011 US 201161530053 P
(43) Date of publication of application: 17.09.2014
(73) Proprietor: Robert Bosch GmbH, 70442 Stuttgart (DE)
(72) Inventor: BARKLEY, Andrew, Stuart, Chicago, IL 60647 (US); WRAY, Jonathan, Richard, Arlington Heights, IL 60004 (US); FLEEGER, James, Earl, Schaumburg, IL 60193 (US); FISCHER, Ernest, John, Northbrook , IL 60062 (US)
(74) Representative: Isarpatent
(86) International application number: PCT/US2012/053664
(87) International publication number: WO 2013/033704

(56) References cited:
- AU-A4- 2010 101 055
- DE-A1-102010 039 108
- JP-A- 2010 201 516
- US-A- 2 543 486
- US-A1- 2009 165 312

## Description

### BACKGROUND OF THE INVENTION

### 1. Field of the Invention.

The present invention relates to a circular saw according to the preamble of claim 1. Such a saw is known from JP 2010 201516 A. AU 2010 101 055 A4 is related to a hand held circular saw.

US 2009/165312 A1 is related to a hand-held power tool.

### 2. Description of the Related Art.

Currently known circular saws have about eighty percent of their weight and volume in the motor. Thus, in order to significantly reduce the size and weight of a circular saw, the size and weight of the motor must be reduced. However, a smaller lighter motor may not have enough power to drive a circular saw with an acceptable level of performance.

Another problem is that the large overhang of the motor interferes with the use of a 2x4 size piece of lumber as an edge guide against the footplate. Thus, such an edge guide can be used only on the blade side of the footplate where there is no motor overhang. Although the depth of cut could be reduced to provide clearance for the edge guide, a full depth of cut could then not be achieved.

Most brushless DC (BLDC) motors (electronically commutated motors) available today are low voltage. Most power tools that utilize brushless DC motors are cordless tools using 12, 18, or 36 volt lithium ion batteries. Using low voltage brushless DC motors in a corded power tool requires a transformer to reduce the voltage from the power grid to a voltage level appropriate for the low voltage motor. However, high power transformers are large and heavy, so including a transformer into a corded power tool would negate the size and weight savings of the brushless DC motor. Some manufacturers have developed corded brushless DC tools with an external transformer. This method allows for a lightweight compact tool, but the tool must connect to a transformer box that converts the voltage. This setup is very similar to the power cords on laptop computers. However, the power consumption of a typical laptop is under 100 watts, and professional power tools can consume over 1,800 watts. The high power demands of power tools require transformers that are several times larger than a traditional laptop

### SUMMARY OF THE INVENTION

The invention is directed to a circular saw in which a size ratio of the overhang of the motor in relation to the size of the footplate ((width of footplate + motor overhang length)/width of footplate) is 1.25 or below. The motor may have a thickness or length of 85 mm or less. Thus, without the motor overhanging the footplate, a 2x4 size piece of lumber may be used as an edge guide on either lateral side of the footplate.

Another embodiment is directed to a circular saw in which a size ratio of the extension of the motor beyond the upper guard ((radius of upper guard + motor extension beyond the upper guard)/radius of upper guard) is 1.25 or below. The motor may have a thickness or length of 85 mm or less. Thus, without the motor extension beyond the upper guard, the overall size of the tool can be reduced.

The present invention may provide a way to make a small motor work on a circular saw without sacrificing power. Thus, a compact tool may be provided that meets customer demand for small and lightweight circular saw.

In one embodiment, the invention incorporates a brushless DC motor to reduce the size and weight of the circular saw. The motor may be substantially cylindrically-shaped, and may have a ratio of diameter to length of about 0.6. The weight of the motor may be about 400 g or 0.875 pound. However, the diameter to length ratio and the weight may be different in other embodiments.

Because of the reduction in the motor overhang, the invention may enable the use of a 5 x 10 cm or 2x4 inch size piece of lumber as an edge guide on either side of the footplate. Moreover, the edge guide may be used on the motor side in conjunction with a full depth of cut.

In one embodiment, the invention comprises a circular saw including a footplate coupled to a saw blade. The footplate has a width between two lateral edges in a direction perpendicular to the saw blade. A DC brushless motor is drivingly coupled to the saw blade and is disposed above the footplate. The motor has a rotational axis within forty five degrees of parallel to the width of the footplate. The motor extends towards one of the lateral edges of the footplate in the width direction. A distance by which the motor extends beyond the lateral edge in the width direction being less than twenty five percent of the width of the footplate.

In a further embodiment, the invention comprises a circular saw including a rotatable saw blade. An upper guard is coupled to the saw blade and covers an upper portion of the blade. The radius of the upper guard extends from the axis of the blade to the outermost surface of the upper guard. A DC brushless motor is drivingly coupled to the saw blade and is disposed above the footplate. The motor has a rotational axis within forty five degrees of parallel to the radius of the upper guard. The motor extends towards the outermost surface of the upper guard in the radial direction. A distance by which the motor extends beyond the outermost surface in the radial direction being less than twenty five percent of the radius of the upper guard.

In an example, a circular saw includes a saw blade coupled to a substantially planar footplate. The saw blade has a neutral position in which the saw blade is substantially perpendicular to the footplate. The blade is bevelable about an axis substantially coplanar with the blade and substantially parallel to the footplate. The blade is bevelable in each of two opposite directions from the neutral position. A DC brushless motor is drivingly coupled to the saw blade.

In an example, a circular saw includes a rotatable saw blade. At least one fan blade is coupled to the saw blade such that the fan blade is rotatable with the saw blade. A DC brushless motor is drivingly coupled to the saw blade and to the at least one fan blade.

In a further example, a circular saw includes a rotatable saw blade. An upper guard is coupled to the saw blade and covers an upper portion of the blade. The upper guard includes a handle that is substantially coplanar with the blade. A DC brushless motor is drivingly coupled to the saw blade.

### BRIEF DESCRIPTION OF THE DRAWINGS

The above mentioned and other features and objects of this invention, and the manner of attaining them, will become more apparent and the invention itself will be better understood by reference to the following description of embodiments of the invention taken in conjunction with the accompanying drawings, wherein:
FIG. 1 is a right side view of one embodiment of a circular saw of the present invention.
FIG. 2 is a sectional view of the circular saw of FIG. 1 along line A--A.

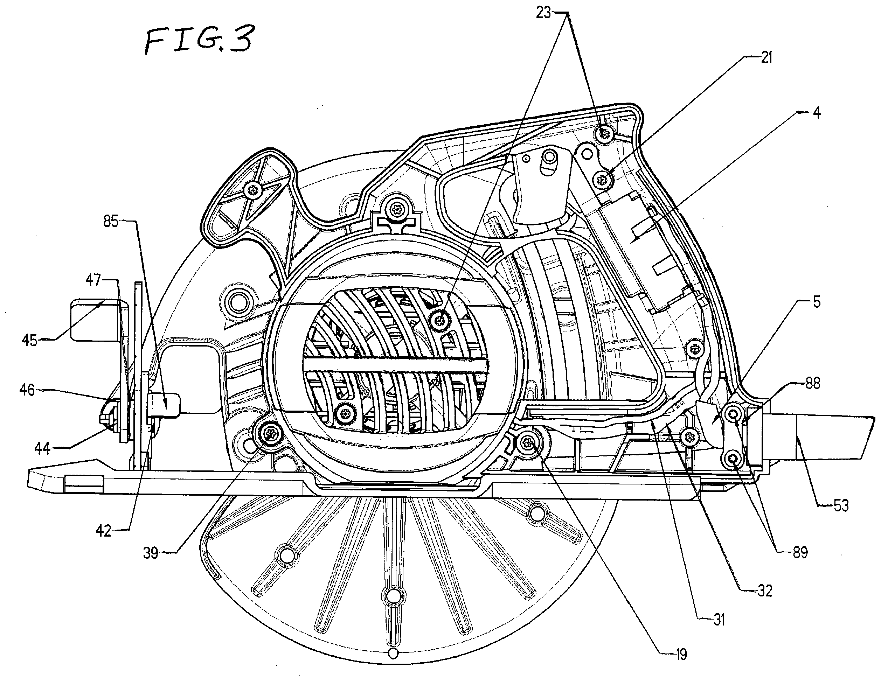

FIG. 3 is a left side view of the circular saw of FIG. 1.
FIG. 4 is a left rear perspective view of another embodiment of a circular saw of the present invention.
FIG. 5 is a rear view of the circular saw of FIG. 4.
FIG. 6 is a right rear perspective view of the circular saw of FIG. 4.
FIG. 7 is a block diagram of yet another embodiment of a circular saw of the present invention.
FIG. 8 is a block diagram of a further embodiment of a circular saw of the present invention.

Corresponding reference characters indicate corresponding parts throughout the several views.

### DESCRIPTION OF THE PRESENT INVENTION

The invention may enable the size and weight of the motor on a working device to be dramatically reduced. The invention may relate to a size ratio of the overhang of the motor in relation to the size of the footplate or upper guard. In one embodiment, the footplate ratio is approximately 1.25 or less ((width of footplate + motor overhang amount)/width of footplate). In another embodiment, the upper guard ratio is 1.25 or less ((radius of upper guard + motor extension beyond the upper guard)/radius of upper guard). These ratios form a bounded surface containing the optimal embodiments of motor overhang and extension. Further, the length of the motor may be 85 mm or less.

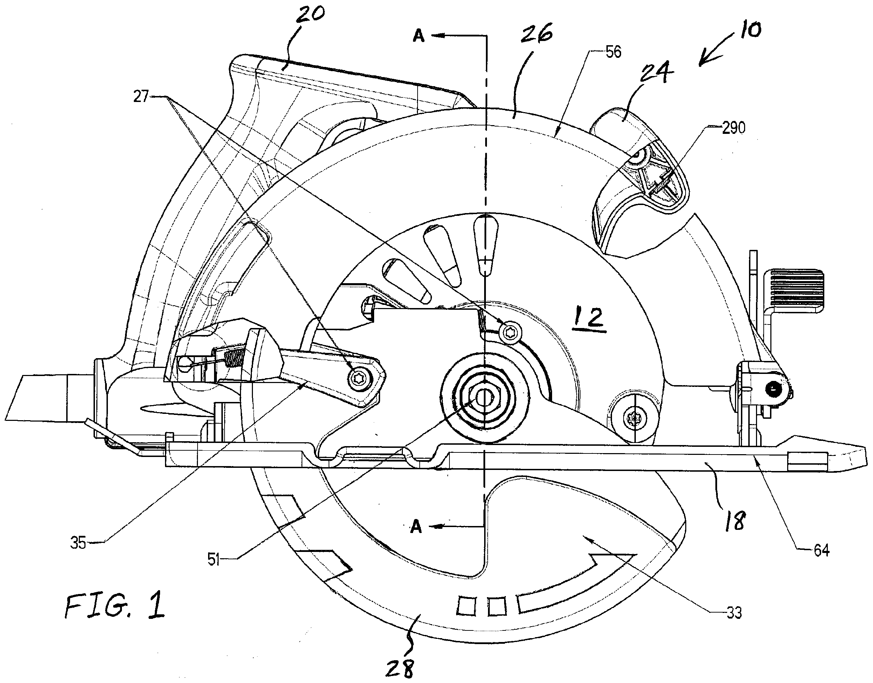

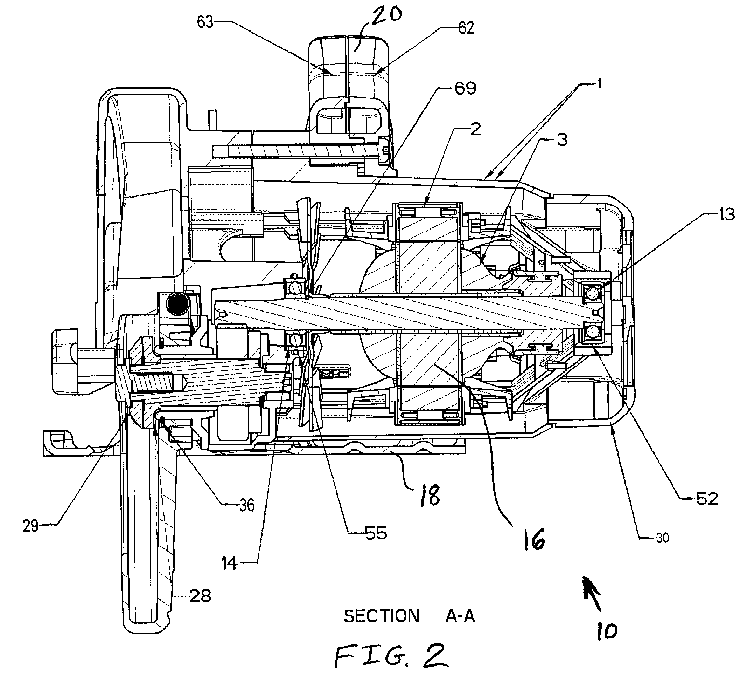

Referring now to the drawings, and particularly to FIG. 1, there is illustrated one embodiment of a circular saw 10 of the present invention including a circular saw blade 12, a BLDC motor 16 (FIG. 2) drivingly coupled to blade 12, and a footplate 18 to which both blade 12 and motor 16 may be mounted. Saw 10 further includes a bearing plate 27, a lift lever 27, a blade bolt 51, a rear handle 20, a front handle 24, an upper blade guard 26, and a lower blade guard 28.

In order to eliminate the need for a transformer, with the associated disadvantages mentioned above, in one embodiment, motor 16 is in the form of a high voltage 120V+ (120VAC, which may be about 170VDC) brushless DC motor. Thus, there may be no need for a transformer, with the associated disadvantages of a transformer mentioned above. Such high voltage BLDC motors are not readily available on the market. In one embodiment, the difference between the high voltage BLDC motor of the present invention and a low voltage BLDC motor is in the windings. In one embodiment, the high voltage brushless DC motor does not require a transformer because the AC line voltage is directly rectified to DC current by a voltage rectifier and a current smoothing filter or capacitor.

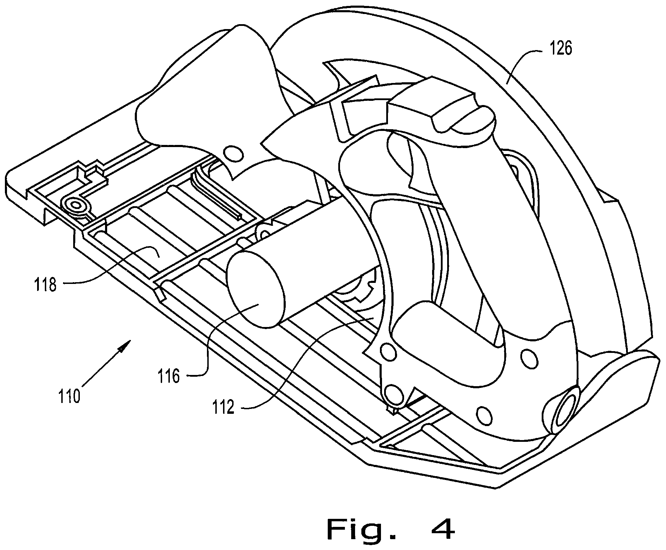

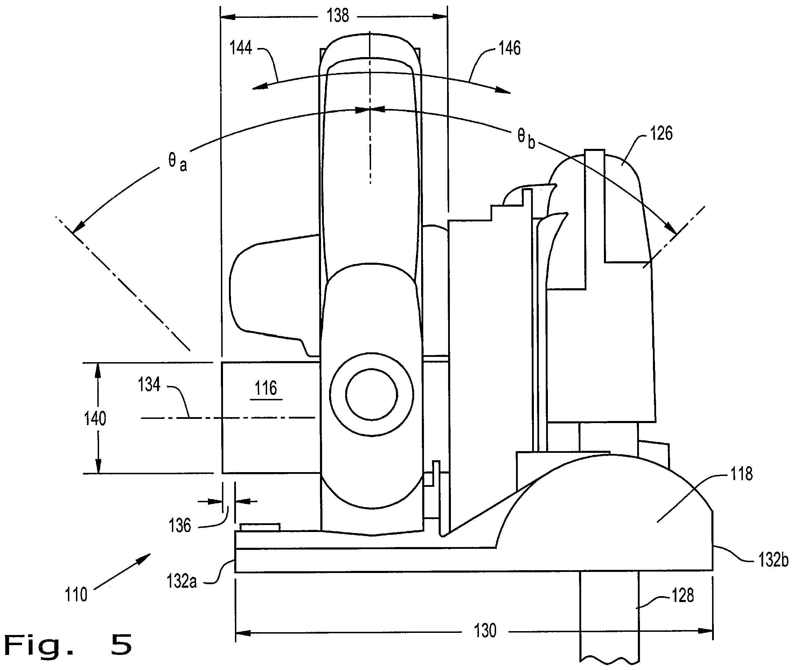

In FIG. 4 there is illustrated another embodiment of a circular saw 110 of the present invention including a circular saw blade 112, a cylindrically-shaped BLDC motor 116 drivingly coupled to blade 112, and a footplate 118 to which both blade 112 and motor 116 may be mounted. Saw 110 also includes an upper blade guard 126, and a lower blade guard 128 (FIG. 5).

Footplate 118 may have a width 130 between two lateral edges 132a-b in a direction perpendicular to saw blade 112. In one embodiment, width 130 may be approximately 140 mm. DC brushless motor 116 is drivingly coupled to saw blade 112 and is disposed above footplate 118. Motor 116 may have a rotational axis 134 that is substantially parallel to width 130 of footplate 118. Motor 116 may extend beyond lateral edge 132a of footplate 118 by an overhang distance 136 in width direction 130. This overhang distance 136 (e.g., the distance by which motor 116 extends beyond lateral edge 132a in the direction of width 130) may be approximately between five and thirty percent of width distance 130 of footplate 118.

In one embodiment, motor 116 has an input voltage of over 40 volts, such as about 120-170 volts (120VAC, which may be about 170VDC), for example. Motor 116 may have a length or thickness 138 of 85 mm or less. In a specific embodiment, motor 116 has a weight of 0.875 pound, a diameter 140 of 40 mm, and a length 138 of 82 mm. However, the dimensions and the weight of the motor may be different in other embodiments. Motor 116 may be sealed in an air-tight manner such that sawdust and other debris cannot enter motor 116 during operation.

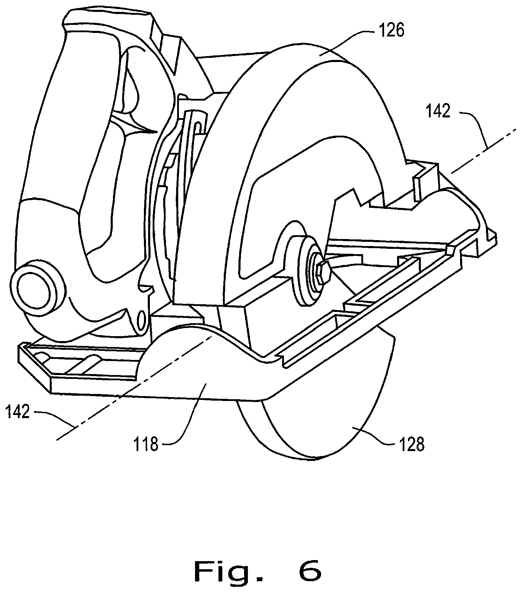

Saw blade 112 may have a neutral position or orientation as shown in the drawings in which saw blade 112 is substantially perpendicular to footplate 118. Blade 112 may be bevelable (i.e., can be beveled) about an axis 142 (FIG. 6) that is substantially coplanar with blade 112 and substantially parallel to footplate 118. Blade 112 may be bevelable in each of two opposite rotational directions 144, 146 (FIG. 5) from the neutral position. By virtue of the relatively small length 138 and diameter 140 of motor 116, blade 112 may be beveled as far in motor direction 144 as in direction 146. Blade 112 may be bevelable by at least 30 degrees in each of the two opposite directions 144, 146 from the neutral position. In a particular embodiment, blade 112 may be beveled up to an angle θₐ of 45 degrees in direction 144, and up to an angle θ_{b} of 45 degrees in direction 146.

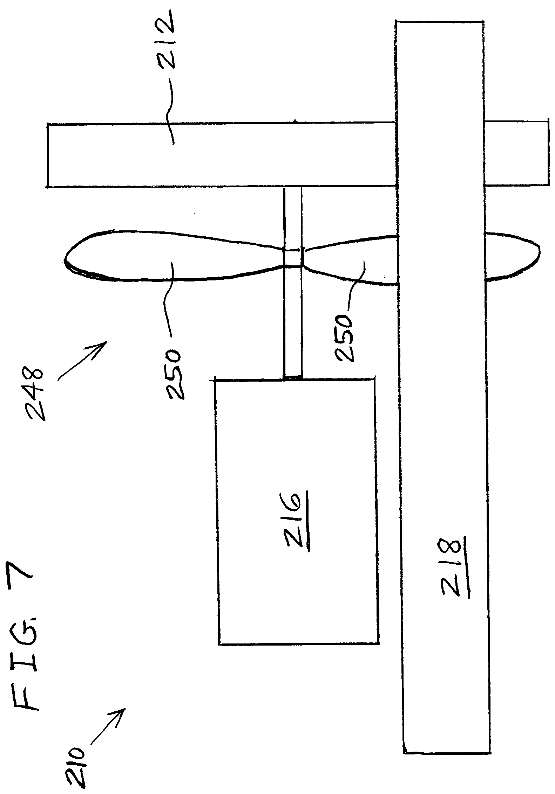

In FIG. 7 there is shown a rear view of yet another embodiment of a circular saw 210 of the present invention including a circular saw blade 212, a cylindrically-shaped BLDC motor 216 drivingly coupled to blade 212, and a footplate 218 to which both blade 212 and motor 216 may be mounted. A fan 248 including a plurality of blades 250 may be coupled to saw blade 212 such that fan blades 250 are rotatable with saw blade 212. Motor 216 may be drivingly coupled to both saw blade 212 and to fan blades 250. Fan blades 250 may provide rotating weight so that if blade 212 encounters a spike in mechanical resistance, then the rotating weight of fan blades 250 may provide additional inertia in order to assist saw blade 212 in overcoming the increased resistance.

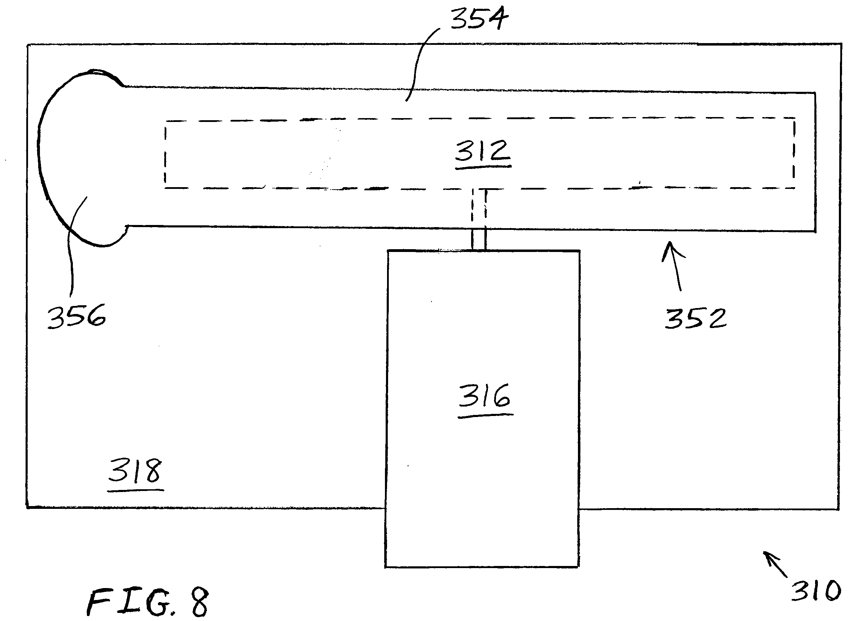

In FIG. 8 there is shown a top plan view of a further embodiment of a circular saw 310 of the present invention including a circular saw blade 312, a cylindrically-shaped BLDC motor 316 drivingly coupled to blade 312, and a footplate 318 to which both blade 312 and motor 316 may be mounted. A guard assembly 352 includes an upper blade guard 354 and a front handle 356 coupled to saw blade 312 and covering an upper portion of blade 312. Upper blade guard 354 and front handle 356 may be substantially coplanar with blade 312. Because of the lightness of motor 316, the center-of-graving of saw 310 may be very close to the plane defined by blade 312. Thus, handle 356 being substantially co-planar with blade 312 may provide saw 310 with a high level of operational stability. In one embodiment, the total weight of saw 310 is about seven pounds, with the heaviest elements being the upper guard, the lower guard, and the gears between motor 316 and blade 312.

In one embodiment, the present invention provides a dual bevel circular saw. Because of the small size and compactness of the BLDC motor, the circular saw may bevel from the vertical orientation in either direction. The beveling may be about a horizontal axis which may be perpendicular to the axis of rotation of the blade. Because of the large motor overhang in existing circular saws, known circular saws can bevel in only one direction. By reducing the motor overhang, the inventive circular saw is capable both of beveling towards the motor and reverse beveling away from the motor. With particular gearing and motor locations, a full reverse bevel beyond 45 degrees from the vertical orientation is possible.

In one embodiment, the present invention includes a step-up transformer. The circular saw or other type of power tool may be configured to selectively run on batteries or with a power cord. When connected to a power cord, the tool operates with power in a way similar to that of any other high voltage corded brushless DC (e.g., electronically commutated) tool. However, when the tool is operated on batteries, the power is limited in order to optimize the power output of the battery pack. The power tool may include a step-up transformer so that a battery pack is able to power the tool's high voltage brushless DC motor. Due to the limited power output of a battery pack, only a relatively small transformer may be called for. In contrast to a step-down transformer which would need to handle the maximum power level that the motor can handle, the step-up transformer only needs to handle the maximum battery output.

In one embodiment, the present invention includes a flywheel. The circular saw or other type of power tool may include a flywheel for storing energy needed to overcome a temporary increase in load or mechanical resistance. One difference between a brushless DC motor (e.g., electronically commutated motor) and an AC motor is that the BLDC motor has a lower rotating mass. The lower rotating mass may enable rapid startup and rapid braking of the power tool, but it may pose challenges when the power tool encounters pockets of dense material such as knots or inclusions in wood. With a traditional AC motor, the higher rotating mass releases kinetic energy to help overcome a momentary spike in resistance. However, the lighter brushless DC motor has less stored kinetic energy, and thus may operate with a disadvantage under these conditions. According to the present invention, this operating disadvantage may be overcome by the inclusion of a flywheel coupled to the motor. The flywheel may enable the power tool to store substantial kinetic energy with a minimal increase in weight. In one embodiment, the flywheel has very little mass other than a dense ring that is as far away from the flywheel's rotational axis as practical.

In one embodiment, the power tool includes a cooling fan that is also the hub of the flywheel. Thus, the brushless DC power tool may be cooled with device that is a combination of a flywheel and a fan. Thus, no additional space may be required for a separate flywheel, and yet the rotating mass that may compensate for the limited mass of the motor may still be provided.

In one embodiment, the location of the upper guard handle may be optimized by virtue of the location of the center of gravity of the saw with the lighter BLDC motor. In general, the ideal handle location for a circular saw may be inline (e.g., coplanar) with the blade. The reason that the ideal handle location may be inline with the blade is that applying manual force in a direction coplanar with the blade may reduce or eliminate the moment caused by applying manual force to an offset handle in a direction that is not coplanar with the blade. This moment can cause binding and reduced cutting efficiency. In known circular saws, handles may be offset from the plane of the saw blade in order to place the handle close to the center of gravity, and thereby provide greater stability. With brushless DC motors (e.g., electronically commutated motors), however, the lightness of the motor results in the center of gravity being closer to the blade. This location of the center of gravity closer to the blade may enable a user to easily handle a saw with the handle mounted inline with the blade.

In general, BLDC motors have maximum torque when stationary, and the torque decreases linearly with increasing rotational speed. Thus, by virtue of the high level of stationary torque, a blade driven by a BLDC motor is less likely to become bound or seized in a workpiece, such as a piece of wood, than is a blade that is conventionally driven by an AC motor.

A BLDC motor may be especially well suited for use in an environment with a lot of sawdust, such as the environment that a circular saw operates in. Because the windings of a BLDC motor may be supported by the housing, the winding may be cooled by conduction. Thus, no airflow inside the motor is required, and the motor may be sealed from outside contaminants.

## Claims

1. A circular saw (10) comprising:
a saw blade (12);
a footplate (18) coupled to the saw blade (12) and having a width between two lateral edges in a direction perpendicular to the saw blade (12);
an upper guard (26) coupled to the saw blade (12) having a diameter extending from the axis of the saw blade (12) to the outermost surface of the upper guard (26); and
a DC brushless motor (16) drivingly coupled to the saw blade (12) and disposed above the footplate (18), the motor (16) having a rotational axis within forty five degrees of parallel to the width of the footplate (18), the motor (16) extending towards one of the lateral edges of the footplate (18) in the width direction; **characterized by** a distance by which the motor extends beyond the lateral edge in the width direction being less than twenty five percent of the width of the footplate (18); or
a DC brushless motor (16) drivingly coupled to the saw blade (12) and disposed above the footplate (18), the motor (16) having a rotational axis within forty five degrees of parallel to the radius of the upper guard (26), the motor (16) extending towards the outermost surface of the upper guard (26) in the radial direction; **characterized by** a distance by which the motor (16) extends beyond the outermost surface in the radial direction being less than twenty five percent of the radius of the upper guard (26).

2. The saw (10) of Claim 1 wherein the motor (16) has an input voltage of over 40 volts.

3. The saw (10) of Claim 1 wherein the motor (16) has an input voltage of about 120-170 volts or of about 240-340 volts.

4. The saw (10) of Claim 1 wherein the motor (16) is electrically connected to AC line voltage by a voltage rectifier and a current smoothing filter or capacitor.

5. The saw (10) of Claim 1 further comprising a step-up transformer configured to electrically connect the motor (16) with a battery device.

6. The saw (10) of Claim 1 wherein the motor (16) has a thickness of 85 mm or less.

7. The saw of Claim 1 wherein the motor is sealed in an air-tight manner.

8. The saw (10) of Claim 1 wherein the motor (16) is substantially cylindrically-shaped.

9. The saw (10) of Claim 8 wherein a ratio of a diameter to a length of the motor is about 0.6.

10. The saw (10) of Claim 1 wherein the motor (16) has a weight of about 400 g or 0.875 pound.

## Patentansprüche

1. Kreissäge (10), umfassend umfasst:
ein Sägeblatt;
eine Fußplatte (18), die mit dem Sägeblatt (12) gekoppelt ist und eine Breite zwischen zwei seitlichen Kanten in einer Richtung senkrecht zu dem Sägeblatt (12) hat;
eine obere Schutzhaube (26), die mit dem Sägeblatt (12) gekoppelt ist und einen Durchmesser hat, der sich von der Achse des Sägeblatts (12) zu der äußersten Fläche der oberen Schutzhaube (26) erstreckt; und
einen bürstenlosen Gleichstrom-Motor (16), der antriebsmäßig mit dem Sägeblatt (12) gekoppelt ist und über der Fußplatte (18) angeordnet ist, wobei der Motor (16) eine Drehachse innerhalb von fünfundvierzig Grad parallel zu der Breite der Fußplatte (18) hat, wobei sich der Motor (16) zu einer der seitlichen Kanten der Fußplatte (18) in die Breitenrichtung erstreckt, **dadurch gekennzeichnet, dass** ein Abstand, um den sich der Motor über die seitliche Kante in die Breitenrichtung erstreckt, kleiner als fünfundzwanzig Prozent der Breite der Fußplatte (18) ist; oder einen bürstenlosen Gleichstrom-Motor (16), der antriebsmäßig mit dem Sägeblatt (12) gekoppelt ist und über der Fußplatte (18) angeordnet ist, wobei der Motor (16) eine Drehachse innerhalb von fünfundvierzig Grand parallel zu dem Radius der oberen Schutzhaube (26) hat, wobei sich der Motor (16) zu der äußersten Fläche der oberen Schutzhaube (26) in die radiale Richtung erstreckt, **dadurch gekennzeichnet, dass** ein Abstand, um den sich der Motor (16) über die äußerste Fläche in die radiale Richtung erstreckt, kleiner als fünfundzwanzig Prozent des Radius der oberen Schutzhaube (26) ist.

2. Säge (10) nach Anspruch 1, wobei der Motor (16) eine Eingangsspannung von über 40 Volt hat.

3. Säge (10) nach Anspruch 1, wobei der Motor (16) eine Eingangsspannung von etwa 120-170 Volt oder von etwa 240-340 Volt hat.

4. Säge (10) nach Anspruch 1, wobei der Motor (16) elektrisch mit einer Wechselstromnetzspannung mittels eines Spannungsgleichrichters und eines Stromglättungsfilters oder eines Kondensators verbunden ist.

5. Säge (10) nach Anspruch 1, die ferner einen Aufwärtstransformator umfasst, der ausgebildet ist, um den Motor (16) mit einer Batterieeinrichtung elektrisch zu verbinden.

6. Säge (10) nach Anspruch 1, wobei der Motor (16) eine Dicke von 85 mm oder weniger hat.

7. Säge nach Anspruch 1, wobei der Motor in einer luftdichten Weise abgedichtet ist.

8. Säge (10) nach Anspruch 1, wobei der Motor (16) im Wesentlichen zylinderförmig ist.

9. Säge (10) nach Anspruch 8, wobei ein Verhältnis eines Durchmessers zu einer Länge des Motors etwa 0,6 beträgt.

10. Säge (10) nach Anspruch 1, wobei der Motor (16) ein Gewicht von etwa 400 g oder 0,875 Pfund hat.

## Revendications

1. Scie circulaire (10) comprenant :
une lame de scie (12) ;
une plaque d'assise (18) couplée à la lame de scie (12) et
ayant une largeur entre deux bords latéraux dans une direction perpendiculaire à la lame de scie (12) ;
un carter supérieur (26) couplé à la lame de scie (12) ayant un diamètre s'étendant de l'axe de la lame de scie (12) à la surface la plus extérieure du carter supérieur (26) ; et
un moteur sans balais à courant continu (16) couplé en entraînement à la lame de scie (12) et disposé au-dessus de la plaque d'assise (18), le moteur (16) ayant un axe de rotation dans les quarante-cinq degrés de parallèle à la largeur de la plaque d'assise (18), le moteur (16) s'étendant vers l'un des bords latéraux de la plaque d'assise (18) dans le sens de la largeur ;
**caractérisée par** une distance par laquelle le moteur s'étend au-delà du bord latéral dans le sens de la largeur étant inférieure à vingt-cinq pour cent de la largeur de la plaque d'assise (18) ; ou
un moteur sans balais à courant continu (16) couplé en entraînement à la lame de scie (12) et disposé au-dessus de la plaque d'assise (18), le moteur (16) ayant un axe de rotation dans les quarante-cinq degrés de parallèle au rayon du carter supérieur (26), le moteur (16) s'étendant vers la surface la plus extérieure du carter supérieur (26) dans la direction radiale ;
**caractérisée par** une distance par laquelle le moteur (16) s'étend au-delà de la surface la plus extérieure dans la direction radiale étant inférieure à vingt-cinq pour cent du rayon du carter supérieur (26).

2. Scie (10) selon la revendication 1, dans laquelle le moteur (16) a une tension d'entrée de plus de 40 volts.

3. Scie (10) selon la revendication 1, dans laquelle le moteur (16) a une tension d'entrée d'environ 120 à 170 volts ou d'environ 240 à 340 volts.

4. Scie (10) selon la revendication 1, dans laquelle le moteur (16) est relié électriquement à la tension de ligne à courant continu par un redresseur de tension et un filtre de lissage de courant ou un condensateur.

5. Scie (10) selon la revendication 1, comprenant en outre un transformateur élévateur configuré pour relier électriquement le moteur (16) à un dispositif à batterie.

6. Scie (10) selon la revendication 1, dans laquelle le moteur (16) a une épaisseur de 85 mm ou moins.

7. Scie selon la revendication 1, dans laquelle le moteur est scellé de manière étanche à l'air.

8. Scie (10) selon la revendication 1, dans laquelle le moteur (16) a une forme sensiblement cylindrique.

9. Scie (10) selon la revendication 8, dans laquelle un rapport d'un diamètre à une longueur du moteur est d'environ 0,6.

10. Scie (10) selon la revendication 1, dans laquelle le moteur (16) a un poids d'environ 400 g ou 0,875 livre.
